Europäisches Patentamt

European Patent Office

Office européen des brevets

(19)

(11) Numéro de publication: **0 384 828 B1**

(12) **FASCICULE DE BREVET EUROPEEN**

(45) Date de publication de fascicule du brevet: **14.09.94**　(51) Int. Cl.⁵: **G02B 6/38**, G01M 11/00, G02B 27/62

(21) Numéro de dépôt: **90400461.1**

(22) Date de dépôt: **20.02.90**

(54) **Dispositif pour le contrôle et l'ajustement de l'alignement modal de fibres optiques.**

(30) Priorité: **21.02.89 FR 8902221**

(43) Date de publication de la demande:
**29.08.90 Bulletin 90/35**

(45) Mention de la délivrance du brevet:
**14.09.94 Bulletin 94/37**

(84) Etats contractants désignés:
**DE GB**

(56) Documents cités:
**FR-A- 2 590 685**

**JOURNAL OF LIGHTWAVE TECHNOLOGY, vol
LT-3, no 4, août 1985, pp 868-874, New York,
US; C.A. MILLAR et al.: "Cladding Alignment
of Butted Optical Fibers Using a Diffraction
Alignment Device (DAD) and its Application
to Mode-Spot Concentricity-Error Measurement"**

**ELECTRONICS LETTERS, vol 20, no 15, 19
juillet 1984, pp 613-614; P. FACO et al.: "Tunable single-mode excitation in multimode
fibres"**

**PATENT ABSTRACTS OF JAPAN, vol 9, no**

**257 (P-396)(1980), 15 octobre 1985 & JP A
60107603**

(73) Titulaire: **FRANCE TELECOM
6, Place d'Alleray
F-75015 Paris (FR)**

(72) Inventeur: **Facq, Paul
73 rue des Fougères
F-87350 Panazol (FR)**
Inventeur: **Fressy, Gilles
14 rue de Kerbiriou
F-22700 Perros Guirec (FR)**
Inventeur: **Pagnoux, Dominique
29 Avenue du Président Coty
F-87100 Limoges (FR)**
Inventeur: **Blondy, Jean-Marc
8 Allée Muriol
F-87100 Limoges (FR)**
Inventeur: **Seignole, Jean-François
Le Decoin
F-24420 Razac sur l'Isle (FR)**

(74) Mandataire: **Gandrille, Pierre et al
Société de Protection des Inventions
25, rue de Ponthieu
F-75008 Paris (FR)**

EP 0 384 828 B1

**Description**

La présente invention a pour objet un dispositif pour le contrôle et l'ajustement de l'alignement modal de fibres optiques. Elle s'applique notamment au contrôle et au réglage de l'alignement modal des coeurs de deux fibres optiques unimodales ou multimodales au niveau de leur connexion et à la réalisation du centrage du coeur d'une fibre à l'intérieur d'une fiche de connexion.

Le moindre désalignement entre deux fibres optiques au niveau de leur connexion engendre des pertes sur le signal transporté. Il est donc très important de contrôler l'état de l'alignement et le cas échéant de pouvoir l'ajuster. Le coeur des fibres peut être excentré par rapport à la gaine, par conséquent il n'est pas suffisant d'aligner les gaines avec une pièce en V par exemple. De manière connue, diverses mesures de contrôle sont effectuées afin d'améliorer l'alignement des fibres et de réduire les pertes.

On connaît une méthode de réglage de l'alignement entre les fibres qui consiste à mesurer la puissance lumineuse transmise par les fibres. On agit mécaniquement sur les fibres au point de connexion de manière à rendre maximum cette puissance lumineuse. Cette technique présente l'inconvénient d'être sensible aux fluctuations de la puissance lumineuse délivrée par la source, aux éventuelles dérives de sensibilité du détecteur utilisé pour la mesure ainsi qu'à la répartion modale de l'énergie dans des fibres pour les fibres multimodales.

Une autre technique connue consiste à mesurer la puissance diffusée au niveau de la connexion ; par action mécanique sur l'une au moins des fibres reliées, on essaye de rendre minimum cette lumière diffusée. Cette technique présente l'inconvénient de nécessiter un dégainage des fibres ou l'emploi de gainages transparents au rayonnement. De plus, les pièces de connexion doivent présenter des zones transparentes pour permettre la mesure.

En outre, ces mesures destinées à l'ajustement entre les fibres ne peuvent être appliquées au simple contrôle d'une connexion fixe puisqu'elles nécessitent une action mécanique sur l'une au moins des fibres de manière à faire varier la puissance lumineuse transmise.

Un bon alignement modal est aussi nécessaire lors du montage d'une fibre optique à l'intérieur d'une fiche de connexion de type fiche droite à sertir.

Les opérations de réglage de la position de la fibre à l'intérieur de la fiche sont usuellement complexes et peu précises voir, par exemple, EP-A-2 590 685 ou journal of Light wave Technology, Vol. LT-3, No.4, p.868-875. L'outillage nécessaire à ces opérations est décrit par exemple dans la notice de montage accompagnant la valise d'outillage PFO de référence F 780 111 000 commercialisée par la Société Radiall.

La fibre sertie dans la fiche est montée, dégainée, dans un embout terminal et mobile. La fiche est assujettie à un support sur lequel est fixée une lunette de visée.

Pour régler la position de la fibre dans la fiche, on doit faire coincider le coeur de la fibre avec un réticule situé dans la lunette. Pour cela une procédure délicate est mise en jeu, la première opération consistant à positionner le réticule grâce à une fiche étalon. Ceci fait, la fiche à régler est montée sur le support, et une extrémité de la fibre est éclairée. En jouant sur la position de l'embout, l'image du coeur de la fibre est superposée au réticule. La position une fois déterminée, la fibre est immobilisée par collage. La précision obtenue par ce réglage est de ± 0,5 micromètres, si la fibre est monomode.

Le but de la présente invention est de remédier à ces divers inconvénients. En effet, lors du contrôle ou de l'ajustement d'une connexion le dégainage des fibres n'est pas nécessaire ; les éléments de connexion quant à eux peuvent être opaques. Le dispositif selon l'invention permet l'ajustement de l'alignement des coeurs des fibres reliées par des connecteurs aussi bien que l'évaluation de la qualité de l'alignement pour des épissures fixes. Il permet de s'affranchir de l'excentrement du coeur dans la gaine.

De plus, le contrôle de l'alignement par un dispositif conforme à l'invention est indépendant des dérives très basses fréquences éventuelles de la puissance lumineuse injectée : il est aussi indépendant des fluctuations modales des sources habituelles.

Utilisé pour régler le centrage d'une fibre dans une fiche de connexion, le dispositif selon l'invention permet de simplifier les diverses opérations de réglage pour une précision plus grande.

De manière plus précise, la présente invention concerne un dispositif pour le contrôle et l'ajustement d'une connexion entre le coeur d'une fibre optique et le coeur d'une autre fibre optique, ou pour le centrage du coeur d'une fibre optique à l'intérieur d'une fiche de connexion, par un alignement modal. Ce dispositif comprend :

- au moins un laser composé d'une cavité présentant un axe longitudinal, et délivrant un faisceau électromagnétique présentant une symétrie de révolution autour de cet axe,
- au moins un sélecteur de mode disposé de manière à ce que son action sur ledit faisceau produise une structure modale du type TEM1,j-1 avec $1{\le}j{\le}n$, où n est un ordre radial maximal d'une fibre optique, cette structure modale présentant un axe de symétrie,

- des moyens pour garantir une polarisation circulaire de lumière émise avant l'introduction de la fibre,
- des moyens pour imprimer à cet axe de symétrie des variations d'orientation autour d'un axe,
- des moyens pour introduire ce faisceau électromagnétique dans une fibre optique,
- des moyens de mesure de puissance lumineuse du faisceau lumineux issu de la face de sortie d'une fibre optique, lors des variations de l'axe de symétrie de la structure modale.

Les caractéristiques et avantages de l'invention apparaîtront mieux après la description qui suit, donnée à titre explicatif et nullement limitatif. Cette description se réfère à des dessins annexés sur lesquels :

- la figure 1 représente schématiquement un dispositif conforme à l'invention,
- les figures 2A et 2B représentent des profils transverses de mode de propagation de type LP1,j pour différentes valeurs de j,
- les figures 3A et 3B représentent schématiquement différentes variantes de réalisation d'un sélecteur de mode utilisé dans un dispositif conforme à l'invention,
- les figures 4A et 4B représentent schématiquement deux orientations possibles d'un polariseur solidaire d'un sélecteur de mode,
- les figures 5A et 5B représentent d'autres variantes de réalisation d'un sélecteur de mode utilisé dans un dispositif conforme à l'invention,
- les figures 6A à 6C représentent schématiquement un dispositif selon l'invention comprenant un prisme de Dove, ainsi que des orientations possibles d'un polariseur compris dans ce dispositif,
- la figure 7 représente schématiquement un dispositif pour l'enregistrement d'un hologramme représentant le mode LP11.
- la figure 8 représente schématiquement un dispositif pour la mise en rotation d'un mode LP11 restitué par l'éclairement d'un enregistrement holographique,
- la figure 9A représente schématiquement un dispositif selon l'invention utilisant plusieurs longueurs d'onde,
- les figures 9B et 9C représentent schématiquement les orientations de la direction de polarisation d'un polariseur compris dans le dispositif représenté sur la figure 9A,
- la figure 10 représente schématiquement une coupe longitudinale des première et seconde fibres optiques, au niveau de la connexion,
- la figure 11 représente schématiquement une section transversale effectuée au niveau de la face d'entrée de la seconde fibre,
- la figure 12 représente schématiquement les variations de la puissance lumineuse transmise par une seconde fibre en fonction de l'angle de rotation de l'axe de symétrie au mode LP1,j choisi,
- la figure 13 représente schématiquement des résultats expérimentaux montrant les variations de la profondeur de modulation de la puissance lumineuse transmise par la seconde fibre, au cours de la rotation de la structure modale introduite dans une première fibre, en fonction du désalignement axial entre deux fibres,
- la figure 14 représente schématiquement un dispositif selon l'invention appliqué au centrage d'une fibre dans une fiche de connexion,
- la figure 15 représente schématiquement une variante de réalisation d'un dispositif selon l'invention appliqué au centrage d'une fibre dans une fiche de connexion.

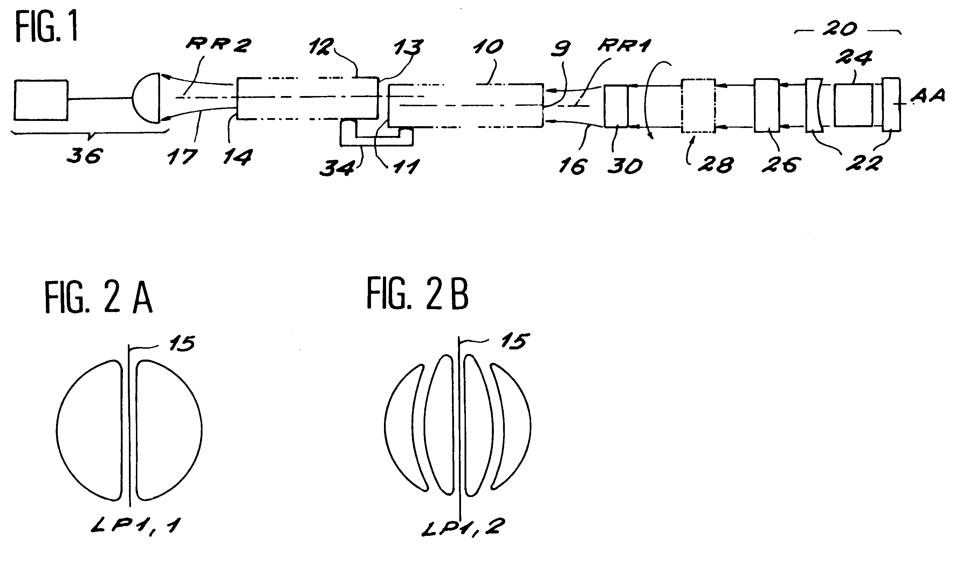

La figure 1 représente schématiquement un dispositif conforme l'invention.

Le faisceau lumineux 16 est délivré par un laser 20 composé d'une cavité optique 22 (composée d'au moins deux miroirs) et d'un milieu amplificateur 24. La cavité optique 22 présente un axe longitudinal AA ; le faisceau lumineux 16 présente une symétrie de révolution autour de cet axe AA.

Le laser 20 peut être un laser à gaz dont le tube contenant le gaz est fermé à une extrémité par un miroir scellé et à l'autre par une lame transparente revêtue de couches antireflets. Ce peut être aussi un laser à solide dont le barreau de matériau amplificateur est cylindrique et pourvu de faces terminales présentant la symétrie de révolution autour de l'axe AA. Le laser peut être aussi un laser à milieu amplificateur liquide de type laser à colorant. La répartition de l'inversion de population dans le milieu amplificateur 24 doit présenter une symétrie de révolution autour de l'axe AA.

Le faisceau 16 délivré par le laser 20 présente un profil transverse gaussien, correspondant au mode TEM0,0 du laser. Un sélecteur de mode 26 est disposé de manière à ce que son action sur le faisceau produise une structure modale TEM1,j-1. Cette structure modale TEM1,j-1 correspond à un mode LP1,j, j étant un entier tel que $1 \leq j \leq n$ où 1 représente l'ordre azimutal et n l'ordre radial maximal des modes pouvant être guidés dans les fibres 10, 12 dont l'ajustement est à vérifier.

Sur cette figure, le sélecteur de mode est à l'extérieur de la cavité optique 22. Mais comme on va le voir plus loin, il peut aussi être placé à l'intérieur de la cavité 22.

De manière préférée, on choisit le mode de propagation LP1,1 qui se réalise simplement. Ce mode LP1,1 correspond à une structure modale TEM1,0.

Les figures 2A et 2B représentent schématiquement des profils transverses de différents modes de propagation LP1,j d'une fibre optique ; ces modes LP1,j correspondent à des modes TEM1,j-1 de faisceau lumineux. Les cas suivants sont représentés : figure 2A, j = 1 ; figure 2B, j = 2.

Les seuls modes de propagation pouvant être utilisés pour ajuster l'alignement des fibres 10, 12 sont ceux du type LP1,j. Ces modes présentent un unique axe de symétrie 15 suivant lequel le champ électromagnétique les constituant est nul. Cet axe de symétrie 15 est appelé "axe modal" dans la suite de la description.

Un dispositif selon l'invention comprend encore, comme on le voit sur la figure 1, des moyens 28 aptes à imprimer à l'axe modal 15 des variations d'orientation autour d'un axe RR1 qui est l'axe de révolution du coeur de la première fibre 10.

Comme on va le voir avec plus de détails dans la suite de la description, ces variations d'orientation peuvent être obtenues en agissant sur l'orientation de la structure modale, par des moyens mécaniques par exemple, soit encore par des moyens purement optiques en agissant directement sur l'orientation des modes pouvant être guidés par les fibres 10, 12 dont l'ajustement est à contrôler.

Tout au long de la description, on utilise l'axe modal 15 comme axe de référence, car la structure modale introduite dans la première fibre 10 présente aussi un axe de symétrie correspondant à l'axe modal 15. De même, les moyens mis en oeuvre pour produire la structure modale présentent un axe correspondant à l'axe modal 15.

Le faisceau 16 est introduit dans la première fibre 10 par sa face d'entrée 9 grâce à des moyens d'introduction : le faisceau 16 est focalisé par des moyens optiques de focalisation 30, un assemblage de lentilles par exemple.

La première fibre optique 10 est connectée par sa face de sortie 11 à la face d'entrée 13 d'une seconde fibre optique 12. Les fibres 10, 12 sont reliées entre elles par une connexion 34 : le dispositif selon l'invention permet de contrôler l'ajustement entre les coeurs des deux fibres 10, 12 au niveau de cette connexion 34 ; il permet en outre d'améliorer cet ajustement. En d'autres termes, il permet de confondre, au niveau de la connexion, les axes de révolution RR1 et RR2 des coeurs des première et seconde fibres 10, 12 respectivement.

Des moyens de mesure de puissance lumineuse 36 mesurent les variations de puissance lumineuse du faisceau lumineux 17 issu de la face de sortie 14 de la seconde fibre optique 12 lors des variations d'orientation de l'axe modal 15.

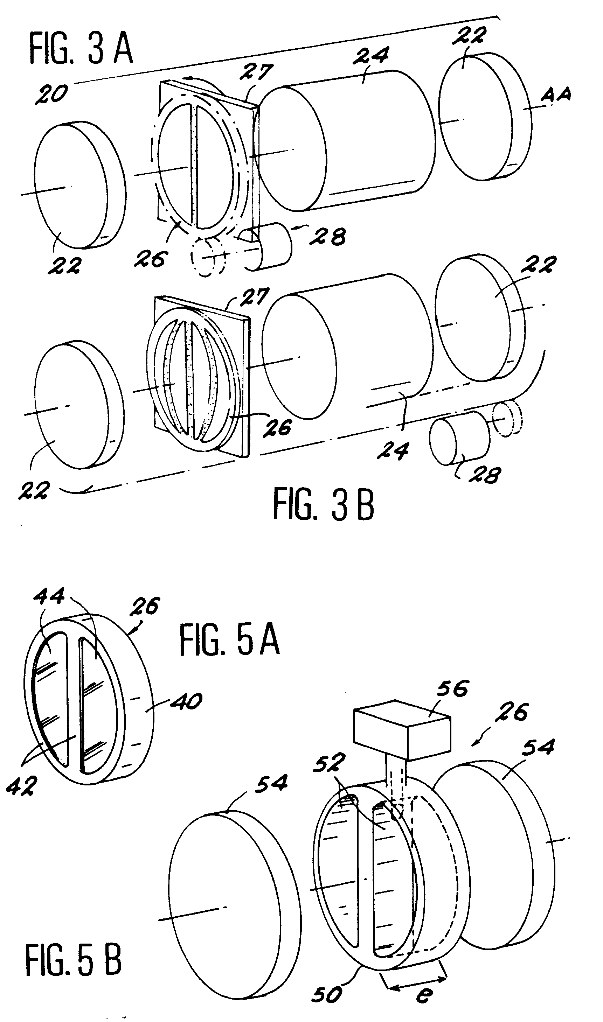

Les figures 3A et 3B représentent schématiquement des moyens de réalisation du sélecteur de mode 26 placé à l'intérieur de la cavité du laser. Ce type de réalisation est décrit dans l'article : "Tunable single-mode excitation in multimode fibres" de P. Facq et al. paru dans la revue Electronics letters du 19 Juillet 1984, vol. 20, n° 15, Pages 613-614.

La figure 3A représente schématiquement un laser contenant un sélecteur de mode intracavité. Ce premier moyen de réalisation du sélecteur de mode 26 consiste en un fil tendu perpendiculairement à l'axe AA longitudinal. Ce sélecteur 26 réalise un mode TEM1,0 du laser correspondant au mode LP1,1 des fibres 10, 12.

Dans cet exemple de réalisation, les moyens 28 aptes à imprimer à l'axe modal 15 des variations d'orientation autour de l'axe de révolution RR1 du coeur de la première fibre 10 consistent en un support du sélecteur de mode 26 apte à mettre en rotation le sélecteur 26. Dans ce cas, le laser sera choisi préférentiellement de manière à fournir un faisceau polarisé circulairement. Les variations d'orientation obtenues ici correspondent à une rotation de l'axe modal 15.

De manière équivalente, le fil tendu à l'intérieur de la cavité peut être remplacé par une gravure effectuée sur la face interne d'un des miroirs de la cavité. C'est alors ce miroir qui est mis en rotation par les moyens 28 aptes à imprimer des variations d'orientation.

La figure 3B représente schématiquement une seconde réalisation d'un sélecteur de mode 26 réalisant un mode TEM1,1, correspondant au mode LP1,2 de la fibre. Des gravures sont réalisées sur une pupille circulaire transparente de manière à obtenir les zéros du champ électromagnétique constituant ledit mode.

Dans cet exemple, les moyens 28 aptes à imprimer des variations d'orientation à l'axe modal 15 consistent en un support du laser 20 apte à mettre en rotation le laser ainsi que le sélecteur de mode 26, solidaire du laser. L'avantage de ce procédé de réalisation réside dans le fait que la puissance lumineuse du mode émis reste constante, indépendamment des conditions de polarisation du faisceau.

Dans cette réalisation, la source d'alimentation électrique (non représentée) est reliée au laser 20 par des contacts tournants (non représentés).

4

De manière préférée, pour la première et la seconde réalisation d'un sélecteur de mode 26 représentées sur les figures 3A et 3B, un polariseur rectiligne 27 est rendu solidaire du sélecteur de mode 26. Le polariseur 27 est donc entraîné en rotation avec le sélecteur de mode 26.

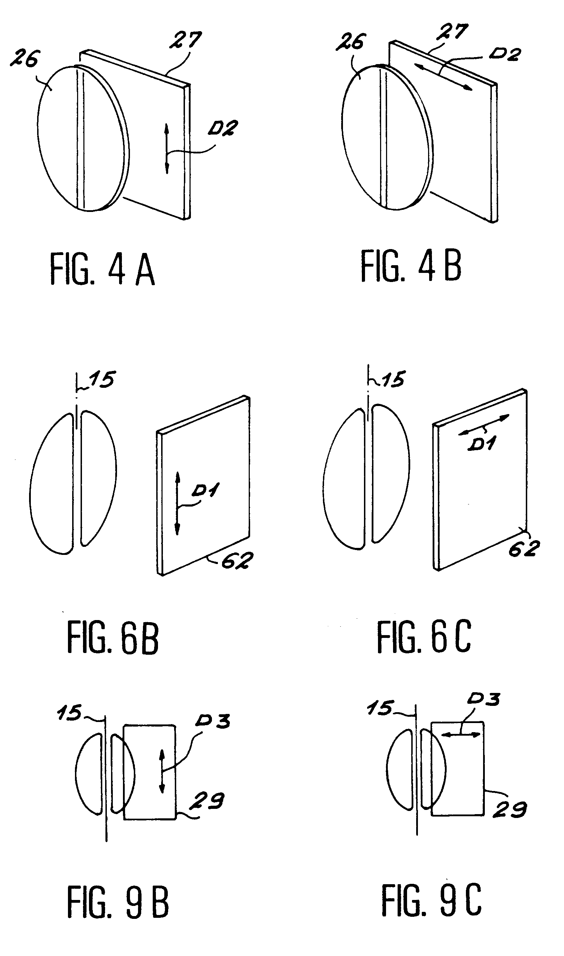

La figure 4A représente schématiquement un sélecteur de mode 26 et le polariseur rectiligne 27 qui lui est solidaire. Dans cette réalisation la direction de polarisation D2 du polariseur 27 est parallèle à l'axe modal 15. Pour cela, la direction D2 est parallèle au fil tendu constituant le sélecteur de mode 26 (dans le cas où le sélecteur de mode 26 est réalisé à partir d'une pupille ou d'un miroir gravé, la direction D2 est parallèle à la gravure centrale).

La figure 4B représente schématiquement un sélecteur de mode 26 et le polariseur 27 qui lui est solidaire. Dans cette réalisation, la direction de polarisation D2 du polariseur 27 est perpendiculaire à l'axe modal 15 ; c'est-à-dire que la direction D2 est perpendiculaire au fil tendu constituant le sélecteur de mode 26.

Les figures 5A et 5B représentent schématiquement des variantes de réalisation d'un sélecteur de mode 26 placé à l'extérieur de la cavité du laser. Lorsque le sélecteur est hors de la cavité, on peut placer sur le trajet du faisceau lumineux issu du laser, un objectif permettant d'augmenter le diamètre du faisceau puis un système optique rendant le faisceau émergeant quasi parallèle.

L'objectif 30 (figure 1) permet de focaliser ensuite la structure modale dans la première fibre 10.

La figure 5A représente schématiquement une variante de réalisation d'un sélecteur de mode 26 placé à l'extérieur de la cavité. Dans ce cas, le sélecteur 26 consiste en une lame transparente homogène 40 à faces parallèles ; une face 42 de la lame 40 est métallisée de manière à laisser transparent, sur cette face 42, un profil transverse reproduisant approximativement le profil du mode LP1,j choisi. Une couche diélectrique transparente 44 est déposée sur les différents lobes laissés transparents de la face 42. Son épaisseur est fonction du lobe recouvert de manière à obtenir les déphasages optiques correspondant au mode LP1,j choisi.

Sur cette figure, on a représenté un sélecteur 26 réalisant un mode LP1,1. Les deux taches de ce mode sont déphasées de $\pi$.

La figure 5B représente schématiquement un éclaté d'un autre moyen de réalisation d'un sélecteur de mode 26. Ce type de réalisation est décrit dans l'article de P. Facq et al. : "Excitation des modes tubulaires dans les fibres multimodales à gradient"paru dans les comptes-rendus de la conférence Photon 80 qui s'est tenue à Paris en Octobre 1980.

Ce sélecteur 26 comporte une plaque opaque 50 d'épaisseur e dans laquelle sont pratiquées des perforations 52 dessinant le profil du mode LP1,j choisi. Dans l'exemple représenté, le profil d'un mode LP1,1 est dessiné.

La plaque 50 est serrée entre deux lames à faces parallèles transparentes 54 de façon à créer des cavités fermées à partir des perforations 52. Chacune des cavités contient un gaz transparent maintenu à une certaine pression. Ce gaz peut être de l'air, par exemple. La pression de l'air dans chacune des cavités est telle qu'on obtienne un déphasage optique de $\pi$ entre les deux cavités. La pression est par exemple fixe dans l'une des cavités, alors que l'autre est reliée à un réservoir 56 d'air en dépression permettant de faire varier la pression.

D'autres types de sélecteurs de mode peuvent être utilisés. Par exemple, le sélecteur peut consister en un filtre holographique réalisant le mode LP1,j choisi.

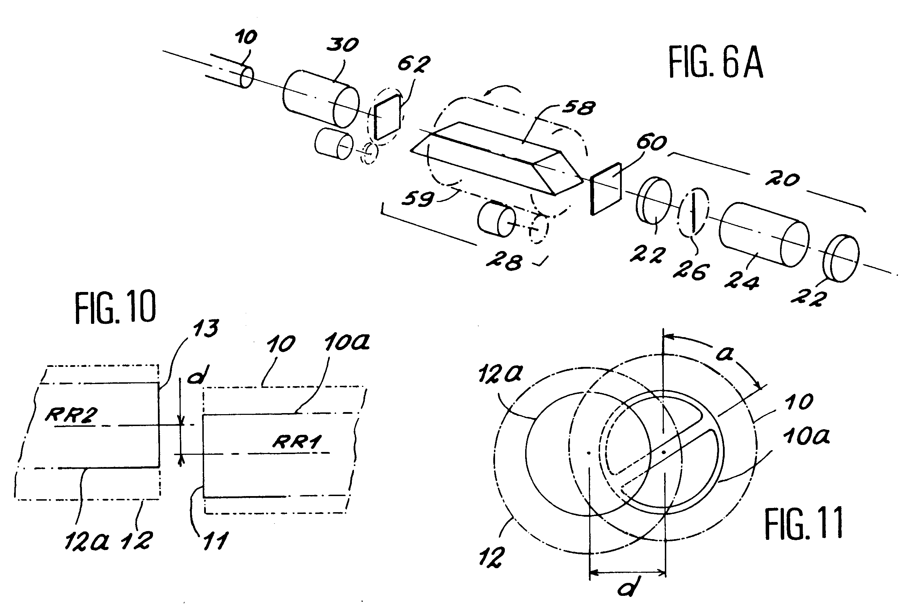

La figure 6A représente schématiquement un dispositif selon l'invention comprenant un laser muni d'un sélecteur de mode intracavité et un prisme de Dove tournant. Le sélecteur 26 consiste, dans l'exemple représenté, en un fil tendu : le mode LP1,1 est donc réalisé.

Les moyens 28 pour imprimer une variation d'orientation à l'axe modal 15 consistent en un prisme de Dove 58 maintenu sur une platine 59 apte à l'entraîner en rotation.

Le prisme de Dove 58 introduit deux réfractions et une réflexion pour le faisceau issu du laser 20. Le rendement de ces réfractions et réflexions dépend de la polarisation du faisceau. Pour rendre ce rendement indépendant de l'angle de rotation, il convient d'introduire dans le prisme un faisceau polarisé circulairement.

Si le faisceau délivré par le laser 20 est polarisé rectilignement, on insère entre le laser 20 et le prisme 58 une lame quart d'onde 60 dont les lignes neutres sont orientées à 45° de la direction de polarisation du faisceau. Au cas où la polarisation du laser est elliptique, on ajoute usuellement un polariseur rectiligne (non représenté) entre le laser 20 et la lame quart d'onde 60.

On facilite le déroulement de la mesure en polarisant le mode LP1,j rectilignement, soit parallèlement à l'axe modal 15, soit perpendiculairement à celui-ci. On place à cet effet un polariseur rectiligne 62 entre le prisme de Dove 58 et l'objectif 30 de focalisation. Ce polariseur 62 tourne à une vitesse angulaire exactement double de la vitesse angulaire de rotation du prisme 58.

La figure 6B représente schématiquement le polariseur 62 de direction de polarisation D1 orientée parallèlement à l'axe modal 15 d'un mode LP1,1. En plaçant un écran (non représenté) en sortie du prisme de Dove, on peut visualiser la structure modale TEM1,0 correspondant au mode LP1,1. Cela permet d'orienter parallèlement à l'axe modal 15 la direction D1 du polariseur 62. L'écran est évidemment retiré une fois le réglage effectué.

La structure modale est mise en rotation à une vitesse angulaire double de celle du prisme de Dove 58 ; c'est pourquoi le polariseur 62 est entraîné en rotation à une vitesse angulaire double de celle du prisme 58.

La figure 6C représente schématiquement le polariseur 62 dont la direction de polarisation D1 est orientée perpendiculairement à l'axe modal 15 d'un mode LP1,1. Le réglage est effectué comme précédemment.

Dans ce cas aussi la rotation du polariseur suit la rotation de la structure modale, ce qui entraîne que la direction D1 et l'axe modal 15 sont en permanence perpendiculaires.

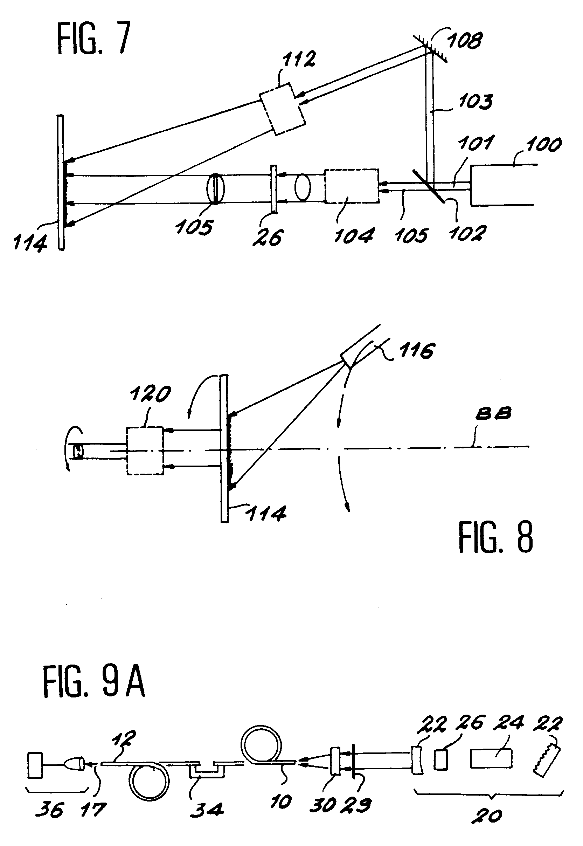

Les figures 7 et 8, dont la description suit, représentent schématiquement l'enregistrement d'un filtre holographique et son utilisation comme sélecteur de mode dans un dispositif selon l'invention.

La figure 7 représente schématiquement l'enregistrement d'un hologramme du mode LP1,1 sur un support photosensible 114. Une fraction 103 du faisceau lumineux 101 émis par la source 100, est déviée par une lame semi transparente 102 en direction du miroir 108 qui la redirige vers le support 114 à travers le dispositif optique 112. La fraction 105 du faisceau 101, transmise à travers la lame 102 est utilisée pour synthétiser un mode LP1,1, en traversant un sélecteur de mode 26, du type de celui décrit figures 4A et 4B, par exemple. Les dispositifs optiques 104 et 112 augmentent le diamètre des fractions respectives 105 et 103 du faisceau 101, afin que les interférences entre ces fractions 105 et 103, obtenues sur le support 114, engendrent un hologramme de grandes dimensions.

La figure 8 représente schématiquement la mise en rotation du mode LP11, restitué en éclairant, à l'aide de la source 116, l'hologramme préalablement enregistré sur le support 114. Le support 114 et la source 116 sont fixes l'un par rapport à l'autre et mis en rotation simultanément autour de l'axe BB. Un système optique 120 permet de réduire les dimensions de la structure modale produite. On peut ainsi l'introduire grâce à l'objectif 30 (figure 1) dans la première fibre optique 10 (non représentée sur la figure 8).

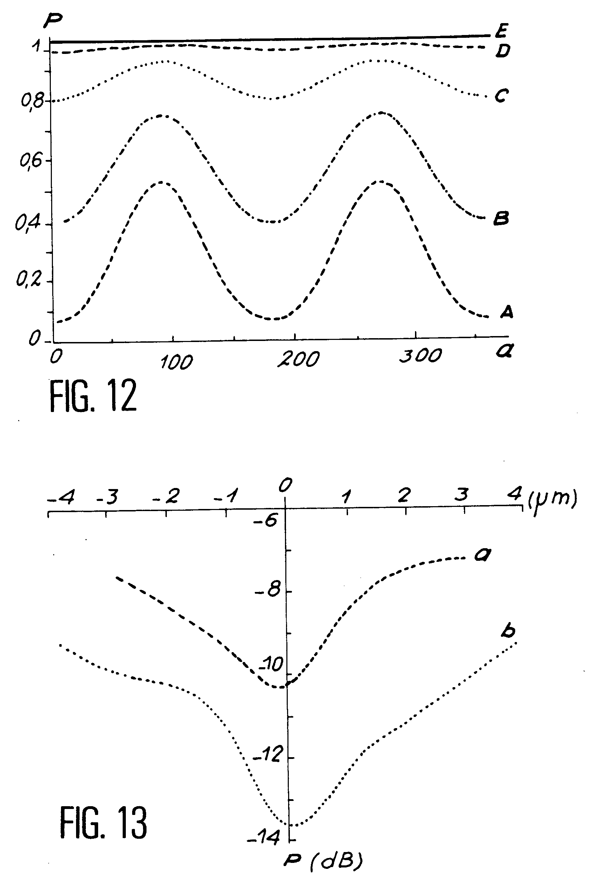

La figure 9A représente schématiquement un dispositif selon l'invention utilisant plusieurs longueurs d'onde.

Dans les réalisations décrites précédemment, les variations d'orientation de l'axe modal 15 sont obtenues par des moyens mécaniques (prisme de Dove tournant, sélecteur de mode tournant, ...) en mettant en rotation la structure modale TEM1,j-1 correspondant au mode LP1,j choisi. La figure 9A représente un dispositif utilisant les propriétés de propagation des modes LP1,j à l'intérieur des fibres 10, 12.

La figure 9A représente schématiquement un dispositif utilisant un laser accordable 20 muni d'un sélecteur de mode 26. Ce laser 20 délivre au moins deux longueurs d'onde déterminées $\lambda 1$ et $\lambda 2$ choisies telles que la puissance mesurée à la sortie de la fibre 12 soit minimum pour l'une des longueurs d'onde et maximum pour l'autre. (La longueur des fibres 10, 12 étant fixée).

La mesure des puissances maximum et minimum permet de déterminer l'amplitude de modulation ; on s'assure du bon alignement des fibres 10, 12 en obtenant le minimum de ce paramètre.

Dans l'exemple de réalisation représenté sur la figure 9A, les structures modales sont polarisées par un polariseur rectiligne 29 avant d'être introduites dans la première fibre 10.

Les figures 9B et 9C représentent schématiquement les deux orientations que prend la direction de polarisation du polariseur 29. On a représenté un mode LP1,1 qui est celui le plus couramment utilisé.

Sur la figure 9B, le polariseur rectiligne 29 a sa direction de polarisation D3 parallèle à l'axe modal 15.

Sur la figure 9C, le polariseur rectiligne 29 a sa direction de polarisation D3 perpendiculaire à l'axe modal 15.

La figure 10 représente schématiquement une coupe longitudinale des première et seconde fibres 10, 12 au niveau de la connexion (le connecteur n'est pas représenté). Sur ce schéma, les fibres ne sont pas alignées parfaitement : les axes RR1 et RR2 sont séparés d'une distance d.

La figure 11 représente schématiquement une section transversale effectuée au niveau de la face d'entrée 13 de la seconde fibre 12. On voit que les axes de révolution RR1 et RR2 des coeurs 10a et 12a des fibres 10 et 12 sont séparés par une distance d.

A l'intérieur de la première fibre 10, on voit la section transverse d'un mode LP11. Le profil transverse de la structure modale se propageant dans la fibre 10 tourne autour de l'axe de révolution RR1 du coeur 10a de la première fibre 10. L'angle mesurant cette rotation est noté $\underline{a}$.

La figure 12 représente schématiquement les variations de la puissance lumineuse du faisceau 17 en fonction de l'angle a. Les courbes représentées correspondent à des résultats théoriques obtenus avec des fibres fabriquées par le Centre National d'Etudes des Télécommunications (CNET) sous la référence 3364. Ce sont des fibres monomodes dont les caractéristiques sont les suivantes : diamètre du coeur = 5 micromètres ; diamètre de la gaine = 105 micromètres ; indice du coeur = 1,464 ; indice de la gaine = 1,457.

Le mode de propagation utilisé est le mode LP1,1.

L'amplitude des variations de puissance au cours de la rotation est d'autant plus importante que les fibres 10, 12 sont désalignées : sur la figure 12, la courbe A correspond à une distance d de 1,5 micromètre ; pour la courbe B, d = 1 micromètre ; pour la courbe C, d = 0,5 micromètre ; pour la courbe D, d = 0,2 micromètre ; pour la courbe E, d = 0 micromètre.

Ces mesures permettent donc de juger de l'état de l'alignement entre les deux fibres 10, 12. Par action mécanique sur l'une au moins des fibres 10, 12, par l'intermédiaire de la connexion 34 (figure 1)par exemple, on peut optimiser l'alignement avec une précision pouvant atteindre 0,01 micromètre.

La figure 13 représente schématiquement les variations de la profondeur de modulation P de la puissance lumineuse recueillie en sortie de la deuxième fibre, en fonction du décalage axial entre les coeurs 10a, 12a des deux fibres 10 et 12, et obtenues lors de la rotation du mode LP1,1 dans la première fibre. P est définie en décibels par

$$P = 10 \log \left( \frac{P_{max} - P_{min}}{P_{max} + P_{min}} \right)$$

Les courbes représentées correspondent à des résultats expérimentaux obtenus avec des fibres fabriquées par le CNET sous la référence 3364. Les courbes a et b correspondent à deux séries de mesures distinctes.

Lorsque l'on utilise deux longueurs d'onde $\lambda 1$ et $\lambda 2$ (figure 9A), celles-ci doivent être choisies de manière à obtenir $P_{max}$ et $P_{min}$. Ainsi, on peut déterminer la profondeur de modulation. On ajuste l'alignement des coeurs 10a, 12a des fibres optiques 10, 12 en obtenant le minimum de la profondeur de modulation, par action sur la connexion entre les deux fibres 10, 12.

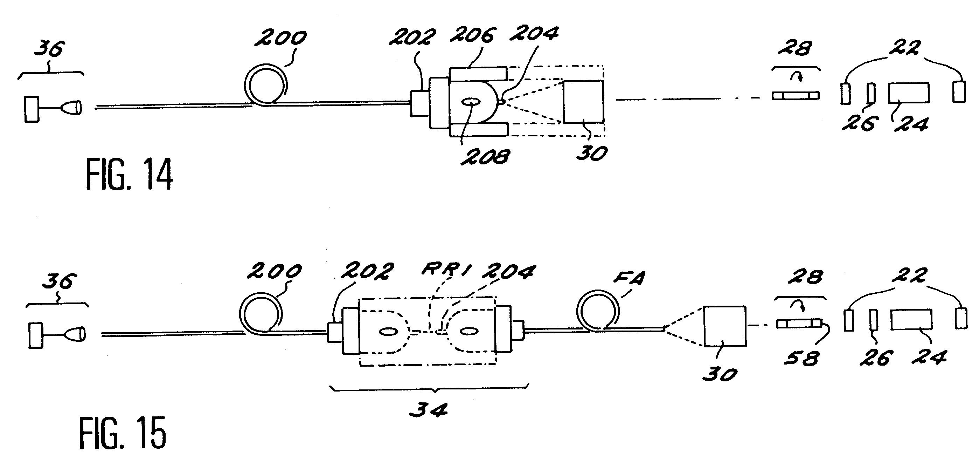

La figure 14 représente schématiquement un dispositif selon l'invention appliqué au centrage d'une fibre dans une fiche de connexion.

Une fibre 200 est sertie dans une fiche de connexion 202. Cette fiche peut être du type "droite à sertir", par exemple une fiche de la série PFO fabriquée par la Société Radiall. L'extrémité de cette fibre 200 dégainée est introduite dans l'embout terminal mobile 204 de la fiche 202.

On veut centrer le coeur de la fibre 200 à l'intérieur de la fiche 202. Pour cela, la fiche 202 est assujettie à des moyens mécaniques 206 parfaitement centrés par rapport au faisceau lumineux délivré par l'objectif 30. Ces moyens 206 sont par exemple une bague filetée parfaitement centrée par rapport au faisceau tournant, et sur laquelle vient se visser la fiche.

Ces moyens mécaniques 206 sont, bien entendu, fixes par rapport à l'ensemble délivrant la structure modale tournante. Cet ensemble présente des éléments précédemment décrits et portant les mêmes références ; le sélecteur de mode 26 peut être un fil tendu dans la cavité 22 du laser par exemple ; les moyens 28 pour imprimer des variations d'orientation à l'axe modal peuvent être un prisme de Dove 58 par exemple.

Grâce aux moyens pour mesurer la puissance 36, on mesure les variations de puissance lors des variations d'orientation de l'axe modal. Par des méthodes connues de positionnement de l'embout 204 (en agissant sur ce dernier par des poinçons pénétrant dans la fiche 202 par des ouvertures 208), on annule les variations de puissance. Lorsque les variations de puissance sont nulles, le coeur de la fibre 200 est centré dans la fiche 202.

Positionnées de cette manière, les fiches peuvent être connectées entre elles avec un minimum de perte sur le signal lumineux transporté.

La figure 15 représente schématiquement une variante de réalisation d'un dispositif selon l'invention appliqué au centrage d'une fibre dans une fiche de connexion.

Les éléments déjà décrits portent les mêmes références que précédemment. Une fibre optique "amorce" FA est solidarisée à l'ensemble délivrant un faisceau lumineux présentant une structure modale tournante. Dans cette réalisation les moyens pour introduire un faisceau électromagnétique dans une fibre optique comporte donc des moyens optiques de focalisation 30 et une fibre optique "amorce" FA apte à se connecter à la fibre optique dans laquelle on veut introduire le faisceau ; cette fibre optique "amorce" FA est connectée à au moins une fiche de connexion 202. En annulant les variations de puissance lumineuse mesurées à la sortie de la fibre FA, on s'assure du bon alignement modal entre le faisceau lumineux issu de 30 et le coeur de la fibre FA.

On connecte ensuite la fiche portée par la fibre FA à une fiche de connexion 202 portant une première extrémité de la fibre 200 à centrer.

Grâce aux moyens 36, on mesure les variations de puissance à l'autre extrémité de la fibre 200. En annulant les variations de puissance, en déplaçant l'embout 204 emprisonnant la fibre 200 à centrer, on s'assure de l'alignement modal des coeurs des fibres FA et 200.

Dans cette variante de réalisation, le terme centrage doit être compris comme un positionnement de référence. En effet, il est possible à l'aide d'une fibre "amorce" FA dont le coeur n'est pas centré dans la fiche de connexion, de réaliser des positionnements tous identiques des fibres à l'intérieur des fiches de connexion. La connexion entre ces fiches est possible, sans perte de signal, bien que le coeur des fibres ne soit pas centré, au sens strict du terme, dans les fiches.

Bien entendu, on peut centrer le coeur de la fibre "amorce" FA dans sa fiche à l'aide du dispositif représenté sur la figure 14. On réalise ensuite, à partir de cette fiche de référence, des fiches de connexion dont le coeur est parfaitement centré.

Cette fibre "amorce" FA décrite dans ce dernier mode de réalisation peut bien sûr faire partie du dispositif selon l'invention dans toutes les variantes de réalisation.

Le dispositif selon l'invention permet donc bien le contrôle et l'ajustement de l'alignement modal de fibres optiques ainsi que le centrage d'une fibre dans une fiche de connexion. Dans ce dernier cas, les écarts résiduels de centrage peuvent être inférieurs à 0,1 micromètre.

**Revendications**

1.  Dispositif pour le contrôle et l'ajustement d'une connexion entre le coeur d'une fibre optique et le coeur d'une autre fibre optique, ou pour le centrage du coeur d'une fibre optique à l'intérieur d'une fiche de connexion, par un alignement modal, le dispositif comprenant :
    - au moins un laser (20) comprenant une cavité (22) présentant un axe longitudinal (AA) et délivrant un faisceau électromagnétique présentant une symétrie de révolution autour de cet axe (AA),
    - au moins un sélecteur de mode (26) disposé de manière à ce que son action sur ledit faisceau produise une structure modale du type TEM1,j-1, avec $1 \leq j \leq n$ où n est l'ordre radial maximal d'une fibre optique, cette structure modale présentant au moins un axe de symétrie (15),
    - des moyens pour garantir une polarisation circulaire de la lumière émise avant l'introduction dans la fibre,
    - des moyens (28) pour imprimer à cet axe de symétrie (15) des variations d'orientation autour d'un axe (RR1),
    - des moyens pour introduire ce faisceau électromagnétique dans une fibre optique,
    - des moyens (36) de mesure de puissance lumineuse du faisceau lumineux (17) issu de la face de sortie (14) d'une fibre optique (12, 200), lors des variations de l'axe de symétrie (15) de la structure modale.

2.  Dispositif selon la revendication 1, tel que ledit sélecteur de mode (26) est apte à agir sur ledit faisceau afin de produire une structure modale TEM1,0.

3.  Dispositif selon la revendication 1, tel que les moyens (28) pour imprimer des variations d'orientation autour d'un axe (RR1) consistent en un prisme de Dove (58) supporté par une platine (59) apte à entraîner ce prisme (58) en rotation à une vitesse angulaire déterminée autour dudit axe (RR1).

4.  Dispositif selon la revendication 3, tel qu'il comprend en outre un polariseur rectiligne (62) tournant à une vitesse angulaire double de la vitesse angulaire de rotation du prisme de Dove (58), ce polariseur (62) gardant une direction de polarisation (D1) parallèle à l'axe de symétrie (15).

**5.** Dispositif selon la revendication 3, comprenant en outre un polariseur rectiligne (62) tournant autour dudit axe (RR1) à une vitesse angulaire double de la vitesse angulaire de rotation du prisme de Dove (58), ce polariseur (62) gardant une direction de polarisation (D1) perpendiculaire à l'axe de symétrie (15).

**6.** Dispositif selon la revendication 1, tel que les moyens (28) pour imprimer des variations d'orientation consistent en un support du sélecteur de mode (26), ce support étant apte à entraîner le sélecteur de mode (26) en rotation autour de l'axe longitudinal (AA) de la cavité (22).

**7.** Dispositif selon la revendication 1, tel que les moyens (28) pour imprimer des variations d'orientation consistent en un support du laser (20) apte à entraîner le laser (20) et le sélecteur de mode (26) rendu solidaire du laser (20) en rotation autour de l'axe longitudinal (AA) de la cavité (22).

**8.** Dispositif selon la revendication 1, tel que les moyens (28) aptes à imprimer des variations d'orientation consistent en :
- un laser accordable (20) produisant un faisceau lumineux présentant au moins deux longueurs d'onde déterminées λ1 et λ2,
- un polariseur rectiligne (29) de direction de polarisation (D3) parallèle à l'axe de symétrie (15),

  les structures modales de longueurs d'onde λ1, et λ2 introduites dans une fibre (10) dont l'alignement modal est à vérifier correspondant l'une à un maximum de puissance mesurée et l'autre à un minimum de puissance mesurée.

**9.** Dispositif selon la revendication 1, tel que les moyens (28) aptes à imprimer des variations d'orientation consistent en :
- un laser accordable (20) produisant un faisceau lumineux présentant au moins deux longueurs d'onde déterminées λ1 et λ2,
- un polariseur rectiligne (29) de direction de polarisation (D3) perpendiculaire à l'axe de symétrie (15),

  les structures modales de longueur d'onde λ1 et λ2 introduites dans une fibre (10) dont l'alignement modal est à vérifier correspondant l'une à un maximum de puissance mesurée et l'autre à un minimum de puissance mesurée.

**10.** Dispositif selon la revendication 1, tel qu'il comprend un polariseur rectiligne (27) solidaire du sélecteur de mode (26), ce polariseur ayant une direction de polarisation (D2) parallèle à l'axe de symétrie (15).

**11.** Dispositif selon la revendication 1, tel qu'il comprend un polariseur rectiligne (27) solidaire du sélecteur de mode (26), ce polariseur ayant une direction de polarisation (D2) perpendiculaire à l'axe de symétrie (15).

**12.** Dispositif selon la revendication 1, tel que les moyens pour introduire le faisceau dans une fibre optique consistent en des moyens optiques de focalisation (30).

**13.** Dispositif selon la revendication 1, tel que les moyens pour introduire le faisceau dans une fibre optique consistent en :
- des moyens optiques de focalisation (30),
- une fibre optique "amorce" (FA) apte à se connecter à la fibre optique dans laquelle le faisceau est introduit.

**14.** Dispositif selon la revendication 1, tel qu'il comprend en outre des moyens mécaniques (206) de positionnement d'une fiche de connexion (204) permettant de réaliser un centrage du coeur d'une fibre optique (200) dans cette fiche (204).

**Claims**

**1.** Device for the control and adjustment of a connection between the core of an optical fibre and the core of another optical fibre, or for the centring of the core of an optical fibre within a connecting plug by a modal alignment, said device comprising:

- at least on laser (20) constituted by a cavity (22) having a longitudinal axis (AA) and supplying an electromagnetic beam having a symmetry of revolution about said axis (AA),
- at least one mode selector (26) positioned in such a way that its action on said beam produces a modal structure of type TEM1,j-1 with $1 \leqq j \leqq n$, in which n is a maximum radial order of an optical fibre, said modal structure having an axis of symmetry (15),
- means for ensuring a circular polarization of light emitted prior to the introduction of the fibre,
- means (28) for imparting to said axis of symmetry (15) orientation variations about an axis (RR1),
- means for introducing said electromagnetic beam into an optical fibre,
- means (36) for measuring the luminous power (17) of the light beam from the exit face (14) of an optical fibre (12, 200), during variations of the axis of symmetry (15) of the modal structure.

2. Device according to claim 1, such that the mode selector (26) is able to act on said beam so as to produce a TEM1,0 modal structure.

3. Device according to claim 1, such that the means (28) to mark orientation variations around an axis (RR1) consist of a Dove prism (58) supported by a plate (59) able to drive this prism (58) in rotation at a specific angular speed around said axis (RR1).

4. Device according to claim 3, such that it also includes a rectilinear polarizer (62) revolving at an angular speed twice the angular speed of rotation of the Dove prism (58), this polarizer (62) retaining a polarization direction (D1) parallel to the axis of symmetry (15).

5. Device according to claim 3, also comprising a rectilinear polarizer (62) revolving around said axis (RR1) at an angular speed twice the angular rotation speed of the Dove Prism (58), this polarizer (62) retaining a polarization direction perpendicular to the axis of symmetry (15).

6. Device according to claim 1, such that the means (28) to mark orientation variations consists of a support of the mode selector (26), this support being able to drive the mode selector (26) in rotation around the longitudinal axis (AA) of the cavity (22).

7. Device according to claim 1, such that the means (28) to mark orientation variations consist of a support of the laser (20) able to rive the laser (20) and the mode selector (26) rendered integral with the laser (20) in rotation around the longitudinal axis (AA) of the cavity (22).

8. Device according to claim 1, such that the means (28) suitable for marking the orientation variations consist of:
   - a tunable laser (20) producing a luminous beam having at least two specific wavelengths λ1 and λ2,
   - a rectilinear polarizer (29) with a polarization direction (D3) parallel to the axis of symmetry (15),
   - the modal structures with wavelengths λ1 and λ2 introduced into a fibre whose modal alignment is to be verified, one of said structures corresponding to a measured power maximum and the other to a measured power minimum.

9. Device according to claim 1, such that the means (28) suitable for marking orientation variations consist of:
   - a tunable laser (20) producing a luminous beam having at least two specific wavelengths λ1 and λ2,
   - a rectilinear polarizer (29) with a polarization direction (D3) perpendicular to the axis of symmetry (15),
   the modal structures with wavelengths λ1 and λ2 introduced into a fibre (10) whose modal alignment is to be verified, one of said structures corresponding to a measured power maximum and the other to a measured power minimum.

10. Device according to claim 1, such that it includes a rectilinear polarizer (27) integral with the mode selector (26), this polarizer having a polarization direction (D2) parallel to the axis of symmetry (15).

11. Device according to claim 1, such that it includes a rectilinear polarizer (27) integral with the mode selector (26), this polarizer having a polarization direction (D2) perpendicular to the axis of symmetry

EP 0 384 828 B1

(15).

12. Device according to claim 1, such that the means to introduce the beam into an optical fibre consist of optical focussing means (30).

13. Device according to claim 1, such that the means to introduce the beam into an optical fibre consist of:
- optical focussing means (30),
- a "leader" optical fibre (FA) suitable for being connected to the optical fibre into which the beam is introduced.

14. Device according to claim 1, such that it also includes mechanical means (206) for positioning a connection plug (204) enabling the core of an optical fibre (200) to be centred in this plug (204).

**Patentansprüche**

1. Anordnung zur Kontrolle und Einstellung einer Verbindung zwischen dem Kern einer optischen Faser und dem Kern einer anderen optischen Faser oder zur Zentrierung des Kerns einer optischen Faser im Inneren eines Steckverbinders durch eine modale Ausrichtung, umfassend:
- wenigstens einen Laser (20), einen Resonator (22) enthaltend, eine Längsachse (AA) aufweisend und einen elektromagnetischen Strahl liefernd, der eine Rotationssymetrie um diese Achse (AA) aufweist,
- wenigstens einen Modeselektor (26), so angeordnet, daß seine Wirkung auf den genannten Strahl eine Modalstruktur des Typs TEM1,j-1 erzeugt, mit $1 \leqq j \leqq n$, wo n die maximale Radialordnung einer optischen Faser ist, wobei diese Modalstruktur wenigstens eine Symetrieachse (15) aufweist,
- Einrichtungen, um eine Zirkularpolarisation des emittierten Lichts vor der Einleitung in die Faser zu gewährleisten,
- Einrichtungen (28), um dieser Symetrieachse (15) Orientierungsveränderungen um eine Achse (RR1) mitzuteilen,
- Einrichtungen, um diesen elektromagnetischen Strahl in eine optische Faser einzuleiten,
- Einrichtungen (36) zur Messung der Lichtleistung des Lichtstrahls (17), ausgetreten aus der Austrittsfläche (14) einer optischen Faser (12, 200) während der Veränderungen der Symetrieachse (15) der Modalstruktur.

2. Anordnung nach Anspruch 1, derartig, daß der Modeselektor (26) imstande ist, auf den genannten Strahl zu wirken, um eine Modalstruktur TEM1,0 herzustellen.

3. Anordnung nach Anspruch 1, derartig, daß die Einrichtungen (28) zur Verleihung von Orientierungsveränderungen um eine Achse (RR1) gebildet werden durch ein Dove-Prisma (58), getragen durch eine Platine (59), geeignet, dieses Prisma mit einer bestimmten Winkelgeschwindigkeit in Drehung zu versetzen um die genanntet Achse (RR1).

4. Anordnung nach Anspruch 3, derartig, daß sie außerdem einen Linearpolarisator (62) umfaßt, der mit einer Winkelgeschwindigkeit dreht, die doppelt so hoch ist wie die Winkelgeschwindigkeit des Dove-Prismas (58), wobei dieser Polarisator (62) eine Polarisationsrichtung (D1) beibehält, die parallel ist zur Symetrieachse (15).

5. Anordnung nach Anspruch 3, außerdem einen Linearpolarisator (62) umfassend, der um die genannte Achse (RR1) mit einer Winkelgeschwindigkeit dreht, die doppelt so hoch ist wie die Rotationswinkelgeschwindigkeit des Dove-Prismas (58), wobei dieser Polarisator (62) eine Polarisationsrichtung (D1) beibehält, die senkrecht ist zur Symetrieachse (15).

6. Anordnung nach Anspruch 1, derartig, daß die Einrichtungen (28) zur Verleihung der Orientierungsveränderungen gebildet werden durch einen Träger des Modeselektors (26), wobei dieser Träger geeignet ist, den Modeselektor (26) in Drehung um die Längsachse (AA) des Resonators (22) zu versetzen.

7. Anordnung nach Anspruch 1, derartig, daß die Einrichtungen (28) zur Verleihung der Orientierungsveränderungen gebildet werden durch einen Träger des Lasers (20), geeignet den Laser (20) und den Modeselektor (26), befestigt am Laser (20), in Drehung um die Längsachse (AA) des Resonators (22)

11

zu versetzen.

8. Anordnung nach Anspruch 1, derartig, daß die Einrichtungen (28), geeignet Orientierungsveränderungen zu verleihen, gebildet werden durch:
   - einen abstimmbaren Laser (20), der einen Lichtstrahl erzeugt, der wenigstens zwei festgelegte Wellenlängen λ1 und λ2 aufweist,
   - einen Linearpolarisator (29) mit einer Polarisationsrichtung (D3), parallel zur Symetrieachse (15),
   - die Modalstrukturen von Wellenlängen λ1 und λ2, eingeleitet in eine Faser (10), deren modale Ausrichtung zu überprüfen ist, wobei die eine einem gemessenen Leistungsmaximum entspricht und die andere einem gemessenen Leistungsminimum.

9. Anordnung nach Anspruch 1, derartig, daß die Einrichtungen (28), geeignet, Orientierungsveränderungen zu verleihen, gebildet werden durch:
   - einen abstimmbaren Laser (20), der einen Lichtstrahl erzeugt, der wenigstens zwei festgelegte Wellenlängen λ1 und λ2 aufweist,
   - einen Linearpolarisator (29) mit einer Polarisationsrichtung (D3) senkrecht zur Symetrieachse (15),
   - die Modalstrukturen von Wellenlängen λ1 und λ2, eingeleitet in eine Faser (10), deren modale Ausrichtung zu überprüfen ist, wobei die eine einem gemessenen Leistungsmaximum entspricht und die andere einem gemessenen Leistungsminimum.

10. Anordnung nach Anspruch 1, derartig, daß sie einen Linearpolarisator (27) umfaßt, verbunden mit dem Modeselektor (26), wobei dieser Polarisator eine Polarisationsrichtung (D2) aufweist, die parallel ist zur Symetrieachse (15).

11. Anordnung nach Anspruch 1, derartig, daß sie einen Linearpolarisator (27) umfaßt, verbunden mit dem Modeselektor (26), wobei dieser Polarisator eine Polarisationsrichtung (D2) aufweist, die senkrecht ist zur Symetrieachse (15).

12. Anordnung nach Anspruch 1, derartig, daß die Einrichtungen zur Einleitung des Strahls in eine optische Faser gebildet werden durch optische Fokussierungseinrichtungen (30).

13. Anordnung nach Anspruch 1, derartig, daß die Einrichtungen zur Einleitung des Strahls in eine optische Faser gebildet werden durch:
   - optische Fokussierungseinrichtungen (30),
   - eine optische "Anfach"-Faser (fibre optique "amorce") (FA), geeignet, angeschlossen zu werden an die optische Faser, in die der Strahl eingeleitet wird.

14. Anordnung nach Anspruch 1, derartig, daß sie außerdem mechanische Einrichtungen (206) zur Positionierung eines Steckverbinders (204) umfaßt, die ermöglichen, eine Zentrierung des Kerns einer optischen Faser (200) in diesem Steckverbinder (204) durchzuführen.

# FIG.1

RR2  12  13  10  9  RR1  — 20 —
24
AA
36  17  14  34  11  16  30  28  26  22

# FIG. 2 A

15

LP1,1

# FIG. 2 B

15

LP1,2

EP 0 384 828 B1

FIG. 3 A

FIG. 3 B

FIG. 5 A

FIG. 5 B

FIG. 4 A

FIG. 4 B

FIG. 6B

FIG. 6 C

FIG. 9 B

FIG. 9 C

FIG.6A

FIG.10

FIG.11

FIG. 7

FIG. 8

FIG. 9 A

FIG. 12

FIG. 13

FIG. 14

FIG. 15

19